Europäisches Patentamt

European Patent Office

Office européen des brevets

(19)

(11) Numéro de publication: **0 249 527 B1**

# (12) FASCICULE DE BREVET EUROPEEN

(45) Date de publication de fascicule du brevet:
28.08.91

(51) Int. Cl.⁵: **G01V 1/36**

(21) Numéro de dépôt: 87401217.2

(22) Date de dépôt: 01.06.87

(54) **Procédé et dispositif de traitement de données sismographique par corrélation.**

(30) Priorité: 02.06.86 FR 8607877

(43) Date de publication de la demande:
16.12.87 Bulletin 87/51

(45) Mention de la délivrance du brevet:
28.08.91 Bulletin 91/35

(84) Etats contractants désignés:
DE FR GB IT NL

(56) Documents cités:
FR-A- 2 257 097
US-A- 3 181 643
US-A- 3 254 835
US-A- 4 592 032

GEOPHYSICS, vol. 35, no. 4, août 1970, pages
574-585, Society of Exploration Geophysicists, Tulsa, Oklahoma, US; D.A. DISHER et
al.: "Statistical automatic statics analysis"

(73) Titulaire: **COMPAGNIE GENERALE DE GEO-
PHYSIQUE
1, Rue Léon Migaux
F-91341 Massy Cédex(FR)**

(72) Inventeur: **Manin, Michel
38, rue Saint Pré Sainte Mesme
F-78730 Saint Arnoult en Yvelines(FR)**

(74) Mandataire: **Schrimpf, Robert et al
Cabinet Regimbeau 26, Avenue Kléber
F-75116 Paris(FR)**

Rank Xerox (UK) Business Services

EP 0 249 527 B1

## Description

L'invention est relative à un procédé et à un dispositif de traitement de données de relevé sismographique par mise en point milieu commun.

Une expérience sismique en vue d'établir un relevé sismographique est caractérisée géométriquement par les paramètres de position de la source et du récepteur. Ces paramètres sont au nombre de quatre dans le cas d'une expérience classique effectuée dans le plan de la surface de la terre. A partir des signaux reçus par le récepteur, on obtient un écho fonction du temps et des paramètres de position relative source-récepteur, variables x,y, profondeur z, en fonction des différentes couches géologiques.

De manière générale, on obtient ainsi une forte redondance de mesures instantanées que l'on peut utiliser selon le procédé connu sous le nom de couverture multiple. Le procédé de couverture multiple permet de focaliser la réception des signaux sur des niveaux ou couches géologiques déterminées et il est ainsi possible de réduire le niveau des signaux indésirables par rapport aux réflexions réelles. Le procédé de couverture multiple consiste ainsi à regrouper des signaux pour lesquels les points milieux du segment reliant la source et le récepteur sont identiques.

Ce regroupement est effectué de manière purement fictive par sélection convenable des valeurs des données correspondantes enregistrées. Pour obtenir de bons résultats, la mise en oeuvre du procédé de traitement en couverture multiple suppose le positionnement parfait de la source et du récepteur ainsi que la validité de la notion théorique de point milieu. Des difficultés très importantes de positionnement parfaitement exact de la source et du récepteur peuvent apparaître, notamment dans le cas de relevés sismographiques obtenus par prospection marine lorsque le ou les récepteurs utilisés sont assujettis à un câble flottant remorqué par un bateau. En outre, la notion de point milieu n'apparaît valide que dans des rares situations, la notion de point milieu étant invalidée dans le cas où le point miroir de réflexion des ondes de pression considérées présente une inclinaison ou pendage.

Bien qu'actuellement une correction du pendage ait été proposée par application des corrections d'espace et du temps prédéterminées au moyen de fonctions mathématiques simples, celles-ci ne peuvent prétendre permettre l'obtention de résultats spécifiques au point de réflexion considéré. L'article "Statistical automatic statics analysis" de D.A. DISCHER et al, paru dans GEOPHYSICS, Vol. 35 n° 4, Août 1990, p. 574-585, décrit en particulier un procédé de correction par corrélation temporelle pour réduire les dispersions de mesure de temps. D'autre part, le brevet américain n° 4 592 032 propose un procédé de correction à partir de la mesure des temps de propagation entre des évènements successifs.

Le procédé objet de l'invention ont pour but de remédier aux inconvénients précités.

Un autre objet de la présente invention est la mise en oeuvre d'un procédé de traitement de données sismographiques permettant, pour des variables de positionnement vraies de la source et du ou des récepteurs, de déterminer l'erreur de position du point milieu, ou réflecteur, statistique, indépendamment des paramètres inconnus de pendage réel au point de réflexion.

Un autre objet de la présente invention est par contre la mise en oeuvre d'un procédé permettant pour une variable de position vraie du point milieu, de déterminer l'erreur de position de la source et du ou des récepteurs associés.

Un autre objet de la présente invention est également par une sommation des niveaux d'amplitude des éléments d'image constitutifs d'une pluralité d'images sismiques distinctes déterminées par un traitement d'intercorrélation, d'obtenir une notoire amélioration du rapport signal à bruit des images résultantes obtenues.

Le procédé de traitement de données de relevé sismographique par couverture multiple objet de l'invention, dans lequel les données relevées sont regroupées pour former une pluralité d'image est remarquable en ce que les images étant définies par des éléments d'image définis en position spatiale par rapport à une direction d'exploitation et présentant un niveau d'amplitude déterminée, est remarquable en ce qu'il consiste, pour chaque couple d'images à effectuer un traitement par corrélation de niveau d'amplitude des éléments d'image correspondants, de façon à établir entre deux images distinctes un coefficient d'intercorrélation de façon à compenser les erreurs de localisation en position desdites images.

Le procédé objet de l'invention trouvent application à la prospection géophysique terrestre, marine, mono,bi ou tridimensionnelle.

D'autres caractéristiques du procédé de traitement de données de relevé sismographique apparaîtront à la lecture de la description et à l'observation des dessins dans lesquels :

- la figure 1 représente à titre d'exemple non limitatif une vue d'une expérience de prospection géophysique marine de relevé sismographique,
- la figure 2 représente une série d'images sismiques obtenues par l'expérience représentée en figure 1,

2

- la figure 3a représente un réseau de valeurs de coefficients d'intercorrélation spatiale pour chaque couple d'images sismiques,
- la figure 3b représente un réseau de valeurs de coefficient d'intercorrélation temporelle pour chaque couple d'images sismiques,
- la figure 3c représente les paramètres d'orientation ou pendage d'un réflecteur par rapport à la source sismique,
- la figure 4 représente un abaque d'écart position spatiale, temps obtenu à partir des différents coefficients d'intercorrélation,
- la figure 5a représente un réseau de valeurs de coefficient de dissemblance entre deux images distinctes et la figure 5b représente un abaque bidimensionnel dans lequel au coefficient de dissemblance entre deux images correspondantes est associé une distance correspondante.

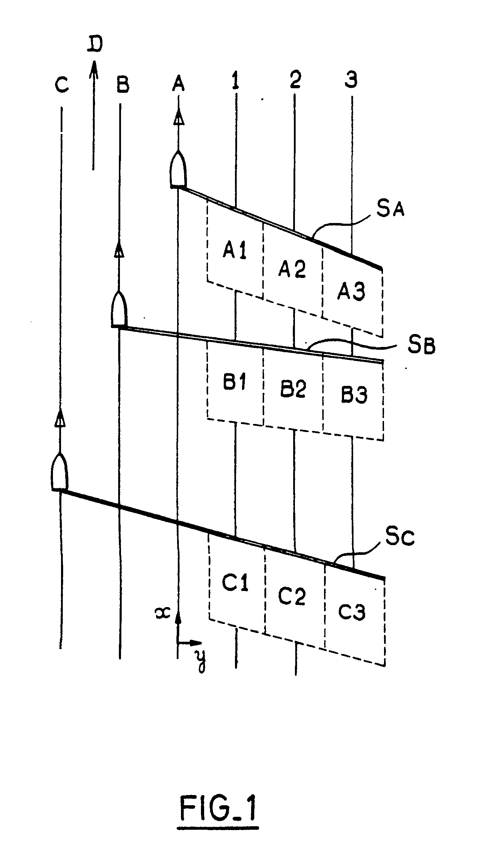

L'invention sera tout d'abord décrite en liaison avec la figure 1.

Le procédé de relevé sismographique en couverture multiple, par mise en point milieu commun consiste à partir des données de relevé regroupés d'une façon arbitraire à former une pluralité d'images. Les images sont définies par des éléments d'image définis en position spatiale par rapport à une direction d'exploitation et présentant un niveau l'amplitude déterminée. Bien entendu, afin d'assurer une visualisation des niveaux du signal d'écho délivré par le récepteur suite à excitation après un tir de la source, ces niveaux d'amplitude du signal d'écho délivrés par le récepteur peuvent être convertis après corrélation en un niveau de gris selon une échelle ou une couleur arbitraire.

Conformément à une caractéristique avantageuse du procédé de l'invention, celui-ci consiste, pour chaque couple d'images, à effectuer untraitement par corrélation de niveau d'amplitude des éléments d'image correspondants, de façon à établir entre deux images distinctes un coefficient d'intercorrélation de façon à compenser notamment les erreurs de localisation en position des images précitées.

Selon une autre caractéristique avantageuse du procédé objet de l'invention, le traitement par corrélation peut consister en un traitement par corrélation spatiale selon au moins une dimension spatiale de position des éléments d'image considérés. De façon classique, la corrélation spatiale pourra être effectuée par rapport à une dimension parallèle à la dimension d'exploitation précitée.

Selon une autre caractéristique avantageuse du procédé objet de l'invention, le traitement par corrélation peut consister en un traitement par corrélation spatio-temporelle, selon la dimension temporelle desdits éléments d'image.

En outre, conformément au procédé de traitement de données de relevé sismographique objet de l'invention, suite au traitement par corrélation précité, le procédé pourra consister à déterminer les décalages spatio-temporels entre chaque couple d'images puis à appliquer ces décalages aux valeurs représentatives de niveaux d'amplitude des éléments d'image considérés et à additionner les valeurs correspondantes après décalage pour chaque couple d'images afin d'améliorer le rapport signal à bruit de l'image résultante.

Le procédé de traitement de données de relevé sismographique conforme à la présente invention peut avantageusement être utilisé pour le traitement de données de relevé sismographique obtenu par des expériences sismographiques les plus diverses.

Le procédé consiste de manière générale à regrouper un petit nombre de signaux de niveau d'amplitude relatif à une trace, les signaux étant pris sur une petite durée en temps, par exemple une durée de 100 ms, en laissant varier par exemple un des paramètres de position et en fixant les autres. On obtient ainsi une petite image sismique à deux dimensions. On peut également laisser varier deux paramètres de position, par exemple selon une première direction parallèle à la direction d'exploitation et selon une deuxième direction perpendiculaire à cette première direction en figeant les autres paramètres. On obtient ainsi une petite image sismique à trois dimensions.

Le procédé objet de l'invention sera plus particulièrement décrit de manière avantageuse, non limitative, dans le cas du traitement tridimensionnel de données de relevé sismographique marine en liaison avec la figure 1.

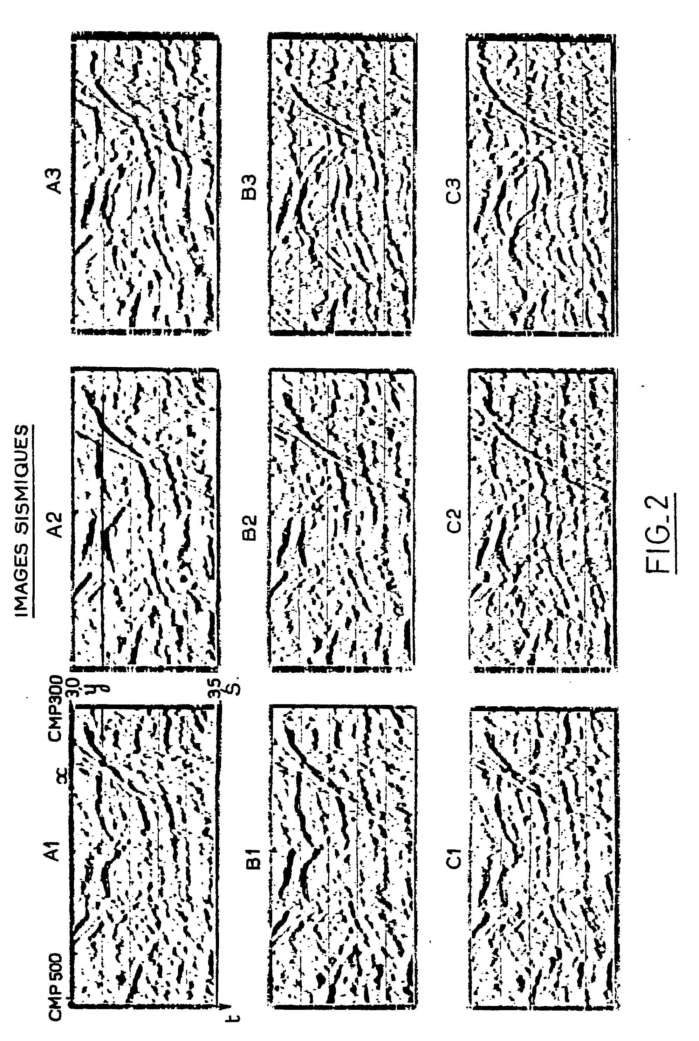

Ainsi qu'il apparaît sur cette figure, les données sont obtenues à partir d'une pluralité de N lignes d'acquisition notées A, B, C, permettant de définir n lignes moyennes de points milieux notées 1, 2, 3, 1 à n, équidistantes par rapport à une source sismique en mouvement. Les sources sismiques en mouvement sont par exemple portées par des navires se déplaçant à vitesse sensiblement uniforme sur les lignes d'acquisition notées A, B, C, selon une direction d'exploitation notée D. Une pluralité de récepteurs ou géophones sont disposés sur un câble de prospection noté SA, SB, SC, chaque câble de prospection étant remorqué par un navire sur la ligne d'acquisition correspondante. Les lignes moyennes de points milieux équidistantes 1 à n et plus particulièrement notées 1, 2, 3 sur la figure 1, sont ainsi définies sensiblement comme le lieu géométrique des points milieux entre la source sismique correspondante portée par le navire sur la ligne d'acquisition considérée et un géophone ou récepteur porté par le câble de prospection SA, SB, SC correspondant. Les câbles d'acquisition SA, SB, SC ont été représentés avec une dérive,ou orientation par rapport à la direction d'exploitation D,accentuée afin de ne pas nuire à la clarté du dessin. Lors du déplacement du navire sur chaque ligne d'acquisition A, B, C, les zones d'échossismiques couvertes par chaque câble d'acquisition SA, SB, SC par rapport aux lignes moyennes de points milieux 1 à n et respectivement 1, 2, 3 sont notées A1, A2, A3, B1, B2, B3, C1, C2, C3. Les signaux engendrés par les échos correspondants aux zones précitées peuvent alors être regroupés pour former une pluralité d'images A1, A2, An;B1, B2, Bn ; C1, C2, Cn, ainsi que représenté en figure 2. Les images précitées peuvent ainsi être paramétrées en position par rapport à des variables de position x et y, la variable x étant sensiblement parallèle à la direction d'exploitation D ou aux lignes d'acquisition A, B, C et la variable y correspondant à une direction perpendiculaire à la direction x. Sur la figure 2, on notera, ainsi qu'il est représenté relativement à l'image A1, que chaque image est ainsi paramétrée en variable de position par la variable x parallèle à la direction d'exploitation D, la variable y qui représente en fait la distance séparant deux éléments d'image occupant normalement la même position dans deux images sismiques successives relatives à deux lignes moyennes de points milieux successives, et un paramètre temps correspondant en fait au temps de propagation et/ou d'acquisition des données suite au tir sismique de chaque source. Ainsi, sur la figure 2, les images sismiques A1, A2, A3, B1, B2, B3, C1, C2, C3 correspondent à des images partielles provenant des trois lignes d'acquisition A, B, C et reparties sur trois lignes moyennes de points milieux équidistantes 1,2, 3, lignes appelées"bin"en langage anglo-saxon,espacées par exemple de 75 mètres.

Le traitement classique des images sismiques telles que représentées en figure 2, les images A1, A2, A3, B1, B2, B3, C1, C2, C3 consisterait à sommer verticalement les images correspondantes A1, B1, C1, c'est-à-dire les images relevées sur chaque ligne moyenne de point milieu.

Contrairement un procédé classique de traitement de type tridimensionnel précédemment cité, le procédé objet de l'invention consiste pour chaque couple d'images Ai, Bj, indépendamment de la ligne moyenne de point milieu considéré, à effectuer un traitement par corrélation de niveau d'amplitude des éléments d'image correspondants. Le traitement par corrélation précité permet d'établir entre deux images distinctes Ai, Bj, Ck, un coefficient d'intercorrélation de façon à compenser les erreurs de corrélation dues par exemple à l'erreur de localisation des câbles de prospection.

Bien entendu, conformément à une caractéristique avantageuse, non limitative, du procédé objet de l'invention, les images Ai, Bj, Ck dont le coefficient d'intercorrélation est supérieur à une valeur déterminée, sont sommées de façon à améliorer le rapport signal à bruit. Par sommation des images, on entend sommation des niveaux d'amplitude des éléments d'image correspondants.

Selon une caractéristique avantageuse du procédé objet de l'invention, le traitement par corrélation consiste entre deux images distinctes Ai, Bj, à établir un coefficient d'intercorrélation de la forme :

$$C\Delta x_{Ai,Bj} = \frac{\Sigma \overline{Ai}(x - \Delta x) \cdot \overline{Bj}(x)}{\Sigma \overline{Ai}^2(x) + \overline{Bj}^2(x)} \qquad (I)$$

$$\text{ou } C\Delta x_{Ai,Bj} = \frac{\Sigma \overline{Ai}(x-\Delta x) \cdot \overline{Bj}(x)}{\sqrt{\Sigma \overline{Ai}^2(x) \cdot \Sigma \overline{Bj}^2(x)}} \qquad (I')$$

Dans les relations précédentes, les termes $\overline{Ai}(x)$ et $\overline{Bj}(x)$ représentent les niveaux d'amplitude à l'abscisse x pour l'image considérée.

On notera que le traitement par corrélation considéré consiste en une corrélation spatiale selon la dimension x, corrélation dans laquelle le paramètre $\Delta x$ représente le paramètre d'écart de position entre deux éléments d'image des images Ai, Bj. Bien entendu afin d'obtenir des résultats homogènes, le coefficient d'intercorrélation peut être normé par rapport au coefficient d'auto-corrélation des images Ai,Bj ainsi qu'il apparaît dans la relation I précédemment citée. L'écart spatial de corrélation minimum $\Delta xM$ entre deux images Ai, Bj est obtenu pour un coefficient d'intercorrélation $C\Delta x_{AiBj}$ maximum. Ainsi, conformément à une autre caractéristique du procédé objet de l'invention, l'écart spatial de corrélation $\Delta x$ entre deux images considérées peut ainsi être appliqué aux éléments d'image correspondants et les valeurs du niveau,

4

EP 0 249 527 B1

d'amplitude de ces éléments d'image peuvent alors être sommées aux valeurs correspondantes des éléments d'image de l'image du couple d'images considéré, de façon à effectuer une sommation afin de diminuer le niveau de bruit de l'image résultante. La sommation peut ainsi être effectuée après décalage de l'écart spatial considéré pour les image successives.

Selon une variante avantageuse du procédé objet de l'invention, outre une corrélation spatiale, une corrélation temporelle peut être effectuée, la corrélation entre deux images Ai, Bj de chaque couple d'images étant effectuée selon le paramètre temps précédemment décrit. Dans ce cas, le coefficient d'intercorrélation est de la forme :

$$K\Delta x, \Delta t_{A_1,Bj} = \frac{\sum_x \sum_t (\bar{A}(x - \Delta x, t - \Delta t)) \cdot \bar{B}(x, t)}{\sum_x \sum_t \bar{A}^2(x, t) + \bar{B}^2(x,t)} \quad \text{(II)}$$

$$\text{ou } K\Delta x, \Delta t_{A_1,Bj} = \frac{\sum_x \sum_t (\bar{A}(x - \Delta x, t - \Delta t)) \cdot \bar{B}(x,t)}{\sqrt{\sum_x \sum_t \bar{A}^2(x,t) \cdot \sum_x \sum_t \bar{B}^2(x,t)}} \quad \text{(II')}$$

Dans les relations précédentes, les termes A (x,t) et B(x,t) représentent les niveaux d'amplitude à l'abscisse x et au temps t pour l'image considérée. L'écart spatio-temporel noté $\Delta x_M$, $\Delta t_M$ de corrélation minimum entre deux images Ai, Bj est obtenu pour un coefficient d'intercorrélation $K\Delta x,\Delta t_{Ai,Bj}$ maximum. Bien entendu, un traitement analogue suite à détermination de l'écart spatio-temporel entre deux images constituant un couple d'images, puis décalage de l'écart spatio-temporel correspondant peut être effectué en vue d'établir une sommation des images correspondantes pour obtenir une diminution du niveau de bruit de l'image résultante.

On comprendra bien sûr que la corrélation spatiale selon la variable x peut être effectuée pour toute valeur de la variable temporelle fixée ou réciproquement, la corrélation temporelle peut être effectuée pour toute valeur fixée de la variable spatiale x. Ainsi, le procédé objet de l'invention peut être mis en oeuvre suite à un traitement de corrélation spatial et/ou temporel.

Une observation des images sismiques A1, A2, A3, B1, B2, B3, C1, C2, C3 montre qu'au sein d'une même ligne moyenne de points milieux, même ligne de "bin", les trois images ne sont pas identiques. La raison de ce défaut entre les images d'une même ligne de points milieux résulte soit de la variation du décalage d'offset moyen entre la source sismique et le récepteur considéré, le décalage d'offset étant défini comme la demi-distance entre la source sismique et le récepteur considéré, ce décalage d'offset moyen correspondant en fait à une variation du point milieu considéré. L'absence d'identité des images sismiques d'une même ligne moyenne de points milieux A1, B1, C1 peut également résulter d'une erreur de position dans une direction perpendiculaire ou transversale à la direction d'exploitation D, la direction y par exemple. Cette absence d'identité peut bien entendu résulter de la combinaison des deux raisons précitées.

Une étude théorique menée à partir d'un modèle mathématique en liaison avec le procédé objet de l'invention a montré que l'écart spatio-temporel ($\Delta x_M$, $\Delta t_M$) pour deux images quelconques Ai, Bj formant un couple d'images, vérifie la relation :

$$\Delta t_M = a \Delta x_M + b \Delta y_M + c \Delta(h^2) + d\Delta\alpha \quad \text{(III)}$$

En effet, la notion de points milieux n'est valide que si les réflecteurs ou points de réflexion de l'onde sismique engendrée en vue de conduire l'expérience, sont horizontaux. S'ils sont inclinés dans un sens, la meilleure corrélation est obtenue pour un $\Delta x$ ou écart de corrélation spatiale lié à une dispersion croissante avec l'offset, dispersion appelée en langage anglo-saxon "DIP MOVE OUT". Cette dispersion ne dépend pas de l'erreur de position de surface. Pour une population de réflecteurs ou de points de réflexion aléatoires, il apparaît un terme ou biais lié au "DIP MOVE OUT" moyen. L'écart de corrélation spatiale $\Delta x$ déterminé conformément au procédé objet de l'invention, contient donc l'écart de corrélation spatiale lié à l'erreur de de position et l'écart de corrélation spatiale lié à la statistique des pendages des réflecteurs ou points de réflexion. Dans la relation III, précédente, telle que vérifiée par l'écart spatio-temporelle $\Delta x_M \Delta t_M$

5

pour deux images quelconques Ai, Bj, formant un couple d'images déterminé, $\Delta t_M$ représente l'écart de corrélation temporelle des deux images considérées, $x_M$ représente l'écart de corrélation spatiale selon la direction x, $\Delta y_M$ représente l'écart des points milieux selon la direction y, $\Delta(h^2)$représente l'écart d'offset moyen pour les deux images considérées, et $\Delta\,\alpha$ représente l'écart de dérive des câbles de prospection, la dérive ayant été définie ainsi que précédemment.

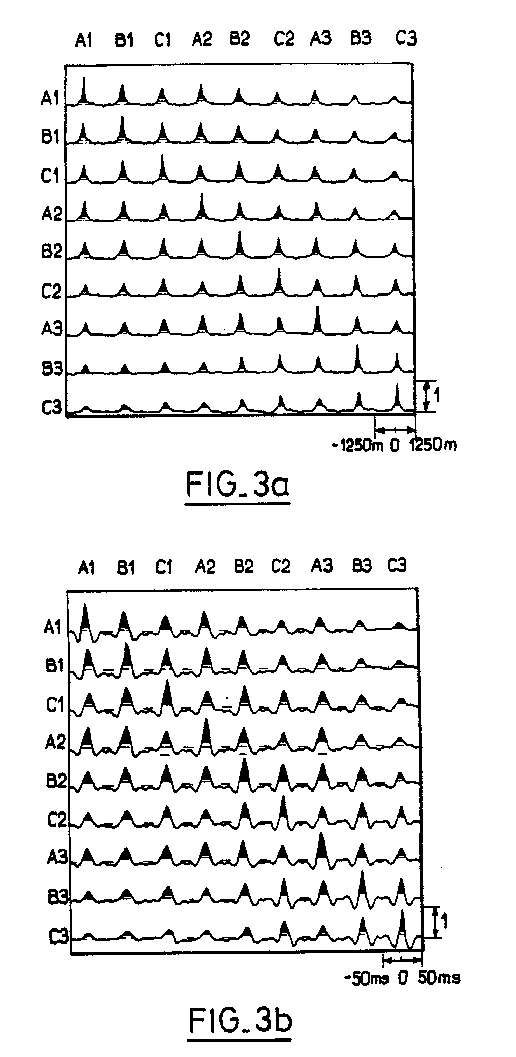

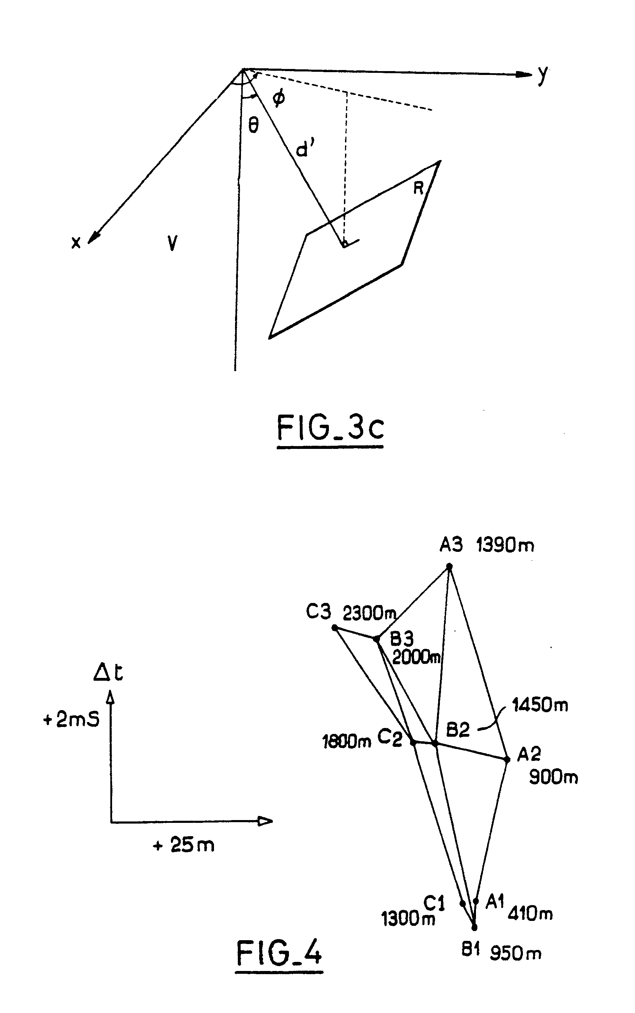

Sur les figures 3a et 3b, on a représenté la valeur des coefficients d'intercorrélation entre les couples d'images, le coefficient d'intercorrélation pour un couple d'images formé par deux images identiques correspondant en fait à la valeur maximale ou coefficient d'auto-corrélation normé à 1. Sur la figure 3b, on a représenté les valeurs des coefficients d'intercorrélation temporelle, pour les couples d'images considérés Ai, Bj, Ck.

Dans la relation précédemment citée, les paramètres a, b, c, d sont des paramètres liés au cosinus directeur aux points milieux considérés du réflecteur correspondant. Sur la figure 3c, on a représenté le réflecteur noté R, ainsi que les cosinus directeurs $\phi,\theta$ de la normale au réflecteur.

Le paramètre a vérifie la relation

$$a = -\frac{2}{V} \sin\theta \cos\phi \, .$$

Le paramètre b vérifie la relation :

$$b = -\frac{2}{V} \sin\theta \sin\phi \, .$$

Le paramètre c vérifie la relation :

$$c = \frac{1}{Vd} \left\{ 1 - \frac{V^2}{V_\star^2} - \sin^2\theta \cos^2 (\phi - \alpha_0) \right\} .$$

Le paramètre d vérifie la relation :

$$d = - \frac{ho^2}{Vd'} \sin^2\theta \sin 2 (\phi - \alpha_0) \, .$$

Dans les relations précédentes vérifiées par les paramètres a, b, c, d, V représente la vitesse quadratique moyenne de l'onde sismique par rapport au réflecteur, $V_\star$ représente la vitesse corrigée après correction dynamique en fonction du récepteur considéré, $\alpha_0$ représente une valeur moyenne de dérive arbitraire.

Selon une caractéristique avantageuse du procédé objet de la présente invention, celui-ci consiste en outre pour au moins chacune des valeurs d'écart spatial $\Delta x_M$ et ou temporel $\Delta t_M$ de corrélation relatif à deux images Ai, Bj quelconques formant chaque couple d'images, à ordonner lesdits coefficients d'intercorrélation, coefficient tel que C $\Delta x_{Ai,Bj}$ et $K\Delta x\Delta t_{Ai,Bj}$, de façon à former pour chacun un réseau de valeurs. Les réseaux de valeurs peuvent par exemple consister en des réseaux obtenus conformément au procédé déjà indiqué et représenté en figures 3a et 3b. Le procédé consiste en outre à établir pour chaque couple d'images Ai, Bj un abaque d'écart représentatif de chaque image Ai, Bj dans un espace $\Delta t_M$, $\Delta x_M$ et des valeurs moyennes d'offset pour chaque image considérée. Un tel abaque est représenté en figure 4, dans un plan $\Delta t$, $\Delta x$ correspondant où les valeurs $\Delta t_M$, $\Delta x_M$ sont représentées. Sur le diagramme représenté en figure 4, on remarque que les points A3, B2 et C1 qui ont des valeurs d'offset voisines ont un écart de corrélation spatiale $\Delta x_M$ inférieur à 5 mètres. Le terme de dispersion ou "DIP MOVE OUT" sensiblement voisin dans les trois cas correspondant aux images A3, B2 et C1, on peut en conclure que le positionnement en x est exact. De la même façon, en ce qui concerne les images A1, B1, C1, lesquelles présentent des offsets de faible valeur mais différents, celles-ci sont extrêmement voisines et il est bien improbable que l'erreur éventuelle de position soit compensée exactement par le terme de pendage. En ce qui concerne l'image sismique C3 pour laquelle l'offset est de 2300 mètres, le point représentatif de l'image considéré se trouve à gauche de B3 pour laquelle l'offset est de 2000 mètres, puis de C2 dont l'offset est 1800 mètres et B2, 1450 mètres, A3 1390 mètres, C1 1300 mètres, A2 et B1 900 mètres et A1 410 mètres. Ce biais est d'ailleurs conforme par son signe avec le sens moyen des pendages constaté sur la section. Le point de réflexion remonte le pendage avec l'offset.

On remarque également que les images sismiques se regroupent par lignes moyennes de points milieux ou lignes de "bin" au niveau des décalages temps : ligne 1 en bas, ligne 2 au milieu, ligne 3 en haut avec un décalage d'environ 2 ms.

En conséquence, les images dont les valeurs d'offset moyen sont voisines sont déterminées par une position sensiblement alignée par rapport à la dimension $\Delta t_M$, images A3, B2, C1 sur la figure 4.

On comprendra bien entendu que l'abaque d'écart représenté en figure 4 peut être établi soit de manière graphique,ainsi que représenté en figure 4, soit par tout programme de calcul permettant par un programme de tri par exemple, le rangement des valeurs correspondantes des valeurs d'écart spatial et/ou temporel $\Delta x_M$, $\Delta t_M$ de corrélation.

Selon un autre aspect particulièrement avantageux du procédé objet de l'invention, en vue de déterminer une information de position relative des images sismiques Ai, Bj, selon la direction y transversale à la direction d'exploitation, le procédé consiste pour chaque couple d'images Ai, Bj, à établir un coefficient de dissemblance noté $d_{ij}$ vérifiant la relation :

$$d_{ij} = \sqrt{\frac{1}{\rho^2} - Bo} \qquad (IV)$$

Dans cette relation, $\rho$ représente la valeur du coefficient d'intercorrélation spatiale $C\Delta x_{Ai,Bj}$ par exemple, et Bo une valeur arbitraire constante représentative du niveau de bruit moyen des éléments d'image des images Ai, Bj. Dans l'expérience sismique menée conformément au procédé objet de l'invention, la valeur de Bo a été prise de manière arbitraire à 1,25. En outre, suite à l'établissement des coefficients de dissemblance $d_{ij}$ relatif à chaque couple d'images Ai, Bj, le procédé objet de l'invention consiste à former à partir des valeurs $d_{ij}$ du coefficient de dissemblance, un abaque bidimensionnel, ledit abaque consistant à associer à chaque image Ai, Bj et à chaque couple Ai, Bj, les coefficients $d_{ij}$ correspondants assimilés à la distance entre les points Ai et Bj.

Dans le cas particulier des images A1, B1, C1, A2, B2, C2, A3, B3, C3, on dispose donc de neuf points dont on connaît les distances deux à deux.

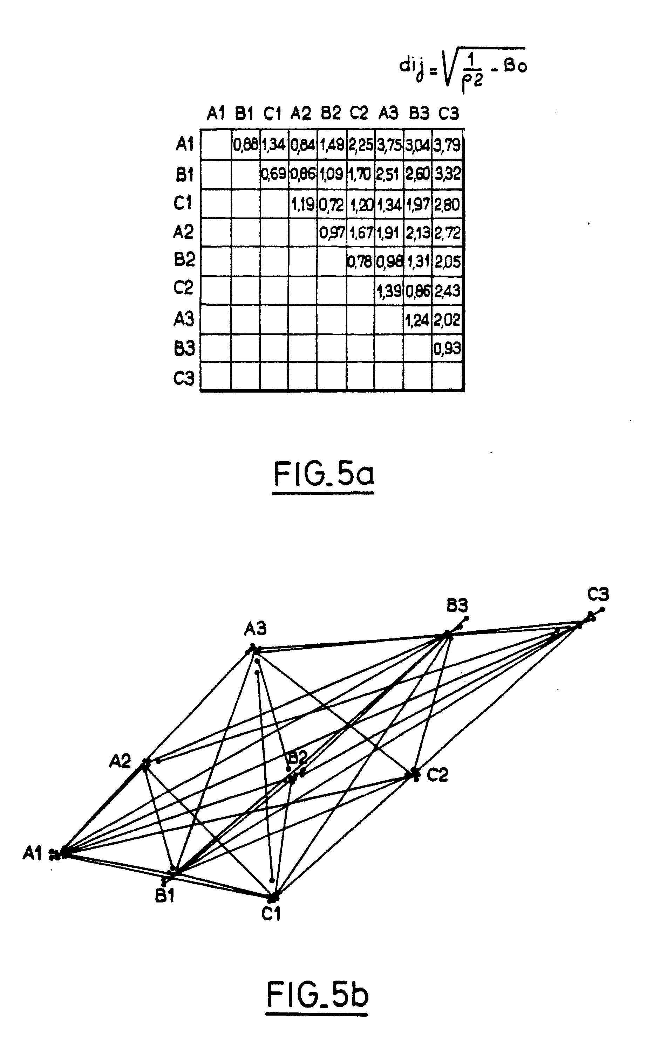

Une représentation graphique dans un plan des points correspondants aux images Ai, Bj précitées et de leur distance respective, permet de montrer le diagramme tel que représenté en figure 5b. On obtient ainsi un abaque dans lequel toutes les distances sont représentées avec précision, en répartissant les erreurs de façon homogène sur chacun des points. Dans l'exemple représenté en figure 5, la distance A2, B1 vaut 0,66,en gros la moitié de la distance A3, C1 qui vaut 1,34 et ainsi de suite. La cohérence des 36 données de distance est très bonne, et elle apparaît peu sensible au seul paramètre de niveau de bruit Bo introduit. Chacun des points étant relié aux huit autres par une distance, on trouve donc huit valeurs pour chaque position d'image. Il est remarquable en effet, que même les grandes distances A1, C3 par exemple correspondant à un coefficient d'intercorrélation de 0,25 concordent avec des distances plus courtes B3, C3 par exemple, où le coefficient d'intercorrélation vaut 0,69.

En outre, le diagramme de points obtenus est réparti suivant un ordre logique, les valeurs d'offset croissant de gauche à droite.

Une modélisation des réflecteurs d'orientation aléatoire montre que la population des écarts temporels de corrélation $\Delta t$ qui sépare deux images sismiques a une variance qui peut être interprétée comme le carré d'une distance dans un espace non orthonormé où les axes représentent le carré de l'offset d'une part, et la position en y d'autre part. On notera que l'unité de mesure sur chacun des axes, ainsi que l'angle qu'ils forment entre eux est lié aux paramètres statistiques de la distribution des réflecteurs. On note sur le diagramme expérimental, que le détail de la vraie valeur des offsets se retrcuve sur celui-ci. On peut alors identifier les alignements A3, B3, C3, A2, B2, C2 et A1, B1, C1 avec la valeur de y, respectivement de 150, 75 et 0 mètres et conclure que le regroupement en points milieux communs réalisé était correct.

On notera également que les droites A3, B3, C3, A2, B2, C2 et A1, B1, C1 ne sont pas parallèles mais convergent sensiblement. Au point de vue topographique, cela peut être expliqué par une dérive correcte sur la ligne d'acquisition A, plus forte que prévu sur la ligne d'acquisition B et plus forte que prévu sur la ligne d'acquisition C. Une étude de ces diagrammes dans d'autres fenêtres de temps au même endroit, a montré que ce biais en fait ne se répétait pas, et qu'en moyenne les trois lignes étaient sensiblement parallèles, suggérant une mise en points milieux communs topographiques corrects.

Le procédé de traitement de données de relevé sismographique objet de l'invention peut avantageusement être mis en oeuvre au moyen d'un dispositif de traitement, comprenant un calculateur permettant d'établir l'ensemble des coefficients d'intercorrélation spatio-temporelle pour chaque couple d'images Ai, Bj et le coefficient de dissemblance $d_{ij}$. Le calculateur peut comprendre une mémoire permanente comportant un programme de calcul de l'ensemble des coefficients ou paramètres précités.

On a ainsi décrit un procédé de traitement de données de relevé sismographique particulièrement performant et remarquable en ce qu'il a permis tout d'abord de vérifier que les images sismiques pouvaient s'ordonner dans un plan et qu'on pouvait introduire une distance entre elles, distance introduite à partir d'un traitement par corrélation de couple d'images formé de deux images distinctes.

**Revendications**

1. Procédé de traitement de données de relevé sismographique par mise au point milieu commun dans lequel les données sont regroupées pour former une pluralité d'images, caractérisé en ce que lesdites images étant définies par des éléments d'image définis en position spatiale par rapport à une direction d'exploitation et présentant un niveau d'amplitude déterminée, ledit procédé consiste, pour chaque couple d'images à effectuer un traitement par corrélation de niveau d'amplitude des éléments d'image correspondants de façon à établir entre deux images distinctes un coefficient d'intercorrélation de façon à compenser les erreurs de localisation en position desdits images, ledit traitement par corrélation étant un traitement par corrélation spatiale selon au moins une dimension spatiale de position desdits éléments d'image.

2. Procédé selon la revendication 1, caractérisé en ce que le traitement par corrélation est un traitement par corrélation spatio-temporelle selon la dimension temporelle desdits éléments d'image.

3. Procédé selon l'une des revendications 1 ou 2, caractérisé en ce que suite au traitement par corrélation précités, ledit procédé consiste à déterminer les décalages spatio-temporels entre chaque couple d'images, à appliquer ces décalages aux valeurs représentatives des niveaux d'amplitude des éléments d'image considérés et à additionner les valeurs correspondantes après décalage pour chaque couple d'image afin d'améliorer le rapport signal à bruit de l'image résultante.

4. Procédé de traitement tridimensionnel de données de relevé sismographique marine, dans lequel les données sont regroupées pour former une pluralité d'images (A1, A2, ... An) ; (B1, B2 ...Bn) ; (C1, C2...Cn), les données étant obtenues à partir d'une pluralité de N lignes d'acquisition permettant de définir n lignes moyennes de points milieux équidistantes (1à n) par rapport à une source sismique en mouvement, selon une direction d'exploitation, sur chaque ligne d'acquisition et à une pluralité de géophones disposés sur un câble de prospection associé à chaque source, caractérisé en ce que lesdites images (Ai, Bj, Ck) étant définies par des éléments d'image d'abscisse x dans une direction parallèle à la direction d'exploitation et présentant un niveau d'amplitude respective $\overline{Ai_{(x,t)}}$, $\overline{Bj_{(x,t)}}$, $\overline{Ck_{(x,t)}}$ ledit procédé consiste pour chaque couple d'images Ai, Bj, à effectuer un traitement par corrélation de niveau d'amplitude des éléments d'image correspondants, de façon à établir entre deux images distinctes Ai, Bj, Ck, un coefficient d'intercorrélation de façon à compenser les erreurs de localisation dues à l'erreur de localisation des câbles, ledit traitement par corrélation consistant, entre deux images distinctes Ai, Bj à établir un coefficient d'intercorrélation de la forme

$$C\Delta x_{Ai,Bj} = \frac{\Sigma \overline{Ai}(x - \Delta x) \cdot \overline{Bj}(x)}{\Sigma Ai(x) + Bj(x)}$$

le traitement par corrélation consistant en une corrélation spatiale selon la dimension X.

5. Procédé selon la revendication 4, caractérisé en ce que les images Ai, Bj, Ck dont le coefficient d'intercorrélation est supérieur à une valeur déterminée sont sommées de façon à réduire le niveau du rapport signal à bruit.

6. Procédé selon l'une des revendications 4 ou 5, caractérisé en ce que l'écart spatial de corrélation mininum ($\Delta x_M$) entre deux images Ai, Bj, est obtenu pour un coefficient d'intercorrélation $C\Delta x_{Ai,Bj}$ maximum.

7. Procédé selon l'une des revendications 4 à 6 , caractérisé en ce que outre une corrélation spatiale, une corrélation temporelle est effectuée, le coefficient d'intercorrélation étant de la forme

$$K\Delta x,\ \Delta t_{Ai,Bj} = \frac{\sum_{x}\sum_{t}(\bar{A}(x-\Delta x, t-\Delta t)).\ \bar{B}(x,t)}{\sum_{x}\sum_{t}\bar{A}^2(x,t) + \bar{B}^2(x,t)}$$

l'écart spatio-temporel ($\Delta x_M, \Delta t_M$) de corrélation minimum entre deux images Ai, Bj étant obtenu pour un coefficient d'intercorrélation maximum $K\Delta x,\Delta t_{Ai,Bj}$.

8. Procédé selon la revendication 7 , caractérisé en ce que l'écart spatio-temporel ($\Delta xM$, $\Delta tM$) pour deux images quelconques Ai, Bj vérifie la relation :

$$\Delta t_M = a\ \Delta x_M + b\ \Delta y_M + c\ \Delta(h^2) + d\Delta\alpha$$

dans laquelle a, b, c, et d sont des paramètres liés aux cosinus directeurs du point milieu considéré, $\Delta y_M$ représente l'écart des points milieux selon la direction Y précitée, $\Delta(h^2)$ représente l'écart d'offset entre les deux images considérées, et $\Delta\alpha$ représente l'écart de dérive des câbles de prospection relatifs aux lignes d'acquisition Ai, respectivement Bj.

9. Procédé selon l'une des revendications 7 ou 8, caractérisé en ce qu'il consiste en outre pour au moins chacune des valeurs d'écart spatial $\Delta x_M$ et/ou temporel $\Delta t_M$ de corrélation, relatif à deux images Ai, Bj quelconques, à
   - ordonner lesdits coefficients d'intercorrélation $C\Delta x_{Ai,\ Bj}$ et $K\Delta x,\Delta t_{Ai,\ Bj}$ de façon à former pour chacun un réseau de valeurs,
   - établir pour chaque couple d'images Ai, Bj un abaque d'écart représentatif de chaque image Ai,Bj dans un espace $\Delta t_M$, $\Delta x_M$ et des valeurs moyennes d'offset pour chaque image.

10. Procédé selon la revendication 9, caractérisé en ce que les images dont les valeurs d'offset moyen sont voisines, sont déterminées par une position sensiblement alignée par rapport à la dimension $\Delta t_M$.

11. Procédé selon l'une des revendications 4 à 10, caractérisé en ce que en vue de déterminer une information de position relative des images Ai, Bj selon la direction y transversale à la direction d'exploitation, ledit procédé consiste, pour chaque couple d'image Ai, Bj,
   - à établir un coefficient de dissemblance $d_{ij}$ vérifiant la relation

$$d_{ij} = \sqrt{\frac{1}{\rho^2} - Bo}$$

dans laquelle $\rho$ représente la valeur du coeffficient d'intercorrélation spatiale $C\Delta_{Ai,\ Bj}$ et Bo une valeur arbitraire constante représentative du niveau de bruit moyen des éléments d'image des images Ai,Bj,
   - à former à partir des valeurs $d_{ij}$ du coefficient de dissemblance, un abaque bidimensionnel, ledit abaque consistant à associer à chaque image Ai, Bj, et à chaque couple d'images Ai,Bj les coefficients $d_{ij}$ correspondants assimilés à la distance entre les points Ai et Bj.

## Claims

1. A method of processing data from a seismographic survey by putting (or gathering) in common mid point in which said data are regrouped to form a plurality of images, characterized in that said images are defined by image elements defined in spatial position with respect to an operating direction and having a level of predetermined amplitude, said method consists, for each pair of images of carrying out a processing by correlation of the amplitude level of said corresponding image elements in order to establish between two distinct images an intercorrelation coefficient in order to compensate localisation errors in the position of said images, said processing by correlation being a processing by spatial correlation on at least one spatial position dimension of said image elements.

2. A method according to claim 1, wherein said correlation processing is a processing by space time correlation in the time dimension of said image elements.

3. A method according to claim 1 or 2, wherein following said correlation process, said method consists of determining space-time displacements between each pair of images, applying said displacements to values representative of amplitude levels of said image elements considered and summing said corresponding values after displacement for each image pair in order to reduce the signal to noise ratio of the resultant image.

4. A method of three-dimensional processing of marine seismographic survey data, in which said data is regrouped to form a plurality of images (A1,A2,...An) ; (B1,B2,...Bn) ; (C1,C2,...Cn), said data being obtained from one of a plurality of N acquisition lines permitting definition of n mean lines of equidistant mid points (1 to n) with respect to a moving seismic source, on one operating direction, on each acquisition line and to a plurality of geophones arranged on a prospecting cable associated with each said source, wherein said images (Ai,Bj,Ck) are defined by image elements for an x abscissa in a direction parallel to said operating direction and having a respective amplitude level $\overline{Ai}_{(x,t)}$, $\overline{Bj}_{(x,t)}$, $\overline{Ck}_{(x,t)}$, said method further consisting for each pair of images (Ai,Bj), of carring out a correlation processing of the amplitude level for said corresponding image elements, in order to establish between two distinct images (Ai,Bj,Ck), and intercorrelation coefficient in order to compensate localisation errors due to error in localisation of said cables, said correlation processing consisting, between two distincts images (Ai,Bj) of establishing an intercorrelation coefficient of a form :

$$C\Delta x_{Ai,Bj} = \frac{\Sigma \overline{Ai}(x-\Delta x) \; . \; \overline{Bj}(x)}{\Sigma A\overset{2}{i}(x) + Bj(x)}$$

said correlation processing consisting of a spatial correlation of the x dimension.

5. A method according to claim 4, wherein said images (Ai,Bj,Ck) of which said intercorrelation coefficient is greater than a predetermined value are summed in a manner to reduce the signal to noise ratio.

6. A method according to claim 4 or 5, wherein spatial deviation for minimum correlation ($\Delta x_M$) between two images (Ai,Bj) is obtained for a maximum intercorrelation coefficient ($C\Delta x_{Ai,Bj}$).

7. A method according to one of claims 4 to 6, wherein further to a spatial correlation, a time correlation is carried out, said intercorrelation coefficient being of a form :

$$K\Delta x, \; \Delta t_{Ai,Bj} = \frac{\underset{x \; t}{\Sigma \; \Sigma} \; (\overline{A}(x - \Delta x, t - \Delta t)) \; . \; \overline{B} \; (x, \; t)}{\underset{x \; t}{\Sigma \; \Sigma} \; \overline{A}^2 \; (x,t) + \overline{B}^2 \; (x,t)}$$

a space-time deviation ($\Delta x_M, \Delta t_M$) for minimum correlation between two images (Ai,Bj) being obtained for a maximum intercorrelation coefficient ($K\Delta x, \Delta t_{Ai,Bj}$).

8. A method according to claim 7, wherein said space-time deviation ($\Delta x_M, \Delta t_M$) for any two images (Ai,Bj) satisfies an equation :

$\Delta t_M = a\Delta x_M + b\Delta y_M + C\Delta(h^2) = d\Delta\alpha$

in which a, b, c and d are parameters connected to director cosines of said considered mid point, $\Delta y_M$ represents deviation of two mid points on said direction (y), $\Delta(h^2)$ represents offset deviation between two images considered, and $\Delta\alpha$ represents deviation derived from relative prospection cables to acquisition lines (Ai,Bj) respectively.

9. A method according to claim 7 or 8, wherein said method consists further for at least each of said values of spatial ($\Delta x_M$) and/or time ($\Delta t_M$) deviation for correlation, relative to any two images (Ai,Bj), of :-
arranging said intercorrelation coefficients ($C\Delta x_{Ai,Bj}$) and ($K\Delta x,\Delta t_{Ai,Bj}$) in a manner to form for each an array of values,
establishing for each pair of images (Ai,Bj) a representative deviation diagram for each image (Ai,Bj) in a space ($\Delta t_M,\Delta x_M$) and mean values of offset for each image.

10. A method according to claim 9, wherein said images of which the values of mean offset are neighbouring, are determined by a position substantially aligned with respect to said dimension ($\Delta t_M$).

11. A method according to one of claims 4 to 10, wherein in order to determine position information relating to image (Ai,Bj) on said direction y transverse to said operating direction, said method consists, for each couple of images (Ai,Bj) of :-
establishing a dissimilarity coefficient ($d_{ij}$) satisfying the equation :

$$d_{ij} = \sqrt{\frac{i}{\rho^2} Bo}$$

in which $\rho$ represents a value of said spatial intercorrelation coefficient ($C\Delta x_{Ai,Bj}$) and (Bo) represents an arbitrary constant value representative of the mean signal to noise ratio for image elements of said images (Ai,Bj).
forming from value ($d_{ij}$) of said dissimilarity coefficient, a two-dimensional diagram, said diagram consisting of associating with each image (Ai,Bj), and each pair of images (Ai,Bj) said corresponding coefficients ($d_{ij}$) assimilated to distance between said points (Ai) and (Bj).

**Patentansprüche**

1. Verfahren zur Verarbeitung von seismographischen Tabellendaten durch das Bringen auf den gemeinsamen Mittelpunkt, bei dem die Daten angeordnet werden, um eine Mehrzahl von Bildern zu bilden, dadurch gekennzeichnet, daß, während diese Bilder durch Bildelemente gebildet werden, die in räumlicher Anordnung durch eine Erkundungsrichtung definiert werden, und ein bestimmtes Amplitudenniveau darstellen, das Verfahren für jedes Bildpaar darin besteht, eine Korrelationsverarbeitung des Amplitudenniveaus der entsprechenden Bildelemente so durchzuführen, daß zwischen zwei verschiedenen Bildern ein Korrelationskoeffizient erzeugt wird, so daß die Positionslokalisationsfehler dieser Bilder kompensiert werden, wobei die Korrelationsverarbeitung eine räumliche Korrelatonsverarbeitung entlang wenigstens einer räumlichen Positionsdimension der Bildelemente ist.

2. Verfahren nach Anspruch 1, dadurch gekennzeichnet, daß die Korrelationsverarbeitung eine zeitlich-räumliche Korrelationsverarbeitung entlang der zeitlichen Dimension der Bildelemente ist.

3. Verfahren nach einem der Ansprüche 1 oder 2, dadurch gekennzeichnet, daß nach der vorgenannten Korrelationsverarbeitung das Verfahren darin besteht, die räumlich-zeitlichen Verschiebungen zwischen jedem Bildpaar zu bestimmen, diese Verschiebungen auf die repräsentativen Werte der Amplitudenniveaus der betrachteten Bildelemente anzuwenden und die entsprechenden Werte nach Verschiebung für jedes Bildpaar zu addieren, um das Signal-Rauschverhältnis des resultierenden Bilds zu verbessern.

4. Verfahren zur dreidimensionalen Verarbeitung von Seismographischen, marinen Tabellendaten, bei dem die Daten gruppiert sind, um eine Mehrzahl von Bildern (A1, A2, ... An); (B1, B2, ... Bn); (C1, C2, ... Cn) zu bilden, wobei die Daten von einer Mehrzahl von N Aufnahmezeilen erhalten werden, die erlauben, n mittlere Zeilen von äquidistanten Mittelpunkten (1 bis n) bezüglich einer entlang einer Erkundungsrichtung beweglichen, seismischen Quelle auf jeder Aufnahmelinie und bezüglich einer Mehrzahl von Geophonen, die auf einem mit jeder Quelle verbundenen Erkundungskabel angeordnet sind, zu bestimmen, dadurch gekennzeichnet, daß, während die Bilder (Ai, Bj, Ck) von Bildelementen der Abszisse x in einer Richtung parallel zur Erkundungsrichtung gebildet werden und einjeweiliges Amplitudenniveau $\overline{Ai_{(x,t)}}$, $\overline{Bj_{x,t)}}$, $\overline{Ck_{(x,t)}}$ darstellen, das Verfahren für jedes Bildpaar Ai, Bj darin besteht, eine Korrelationsverarbeitung des Amplitudenniveaus der entsprechenden Bildelemente so auszuführen, daß zwischen zwei verschiedenen Bildpunkten Ai, Bj, Ck ein Korrelationskoeffizient erzeugt wird, so daß die Lokalisationsfehler aufgrund von Lokalisierungsfehlern für die Kabel kompensiert werden, wobei die Korrelationsverarbeitung zwischen zwei verschiedenen Bildpunkten Ai, Bj darin besteht, einen Korrelationskoeffizienten der Form

$$C\Delta x_{Ai, Bj} = \frac{\Sigma \overline{Ai}\,(x - \Delta x) \cdot \overline{Bj}(x)}{\Sigma Ai^2(x) + Bj^2(x)}$$

zu bilden, wobei die Korrelationsverarbeitung aus einer räumlichen Korrelation entlang der Dimension x besteht.

5. Verfahren nach Anspruch 4, dadurch gekennzeichnet, daß die Bilder Al, Bj, Ck, deren Korrelationskoeffizient höher als ein vorgegebener Wert ist, so summiert werden, daß das Signal-Rauschverhältnis reduziert wird.

6. Verfahren nach einem der Ansprüche 4 oder 5, dadurch gekennzeichnet, daß der räumliche Abstand minimaler Korrelation ($\Delta x_M$) zwischen zwei Bildpunkten Ai, Bj für einen maximalen Korrelationskoeffizienten $C\Delta x_{Ai, Bj}$ erhalten wird.

7. Verfahren nach einem der Ansprüche 4 bis 6, dadurch gekennzeichnet, daß außer der räumlichen Korrelation eine zeitliche Korrelation ausgeführt wird, wobei der Korrelationskoeffizient der Form

$$K\Delta x, \Delta t_{Ai, Bj} = \frac{\sum_x \sum_t (\overline{A}(x - \Delta x, t - \Delta t)) \cdot \overline{B}(x, t)}{\sum_x \sum_t \overline{A^2}(x, t) + \overline{B^2}(x, t)}$$

ist, wobei der räumlich-zeitliche Abstand ($\Delta x_M$, $\Delta t_M$) minimaler Korrelation zwischen zwei Bildern für einen maximalen Korrelationskoeffizienten $K\Delta x, \Delta t_{Ai, Bj}$ erhalten wird.

8. Verfahren nach Anspruch 7, dadurch gekennzeichnet, daß der räumlich-zeitliche Abstand ($\Delta x_M$, $\Delta t_M$) für zwei beliebige Bildpunkte Ai, Bj folgender Beziehung genügt:

$$\Delta t_m = a\Delta x_M + b\Delta y_M + c\Delta(h^2) + d\Delta\alpha$$

in der a, b, c und d Parameter sind, die mit dem Richtungskosinus des betrachteten Mittelpunkts verbunden sind, $\Delta y_M$ den Abstand des Mittelpunkts entlang der vorgenannten Richtung y darstellt, $\Delta(h^2)$ den Offsetabstand zwischen den beiden betrachteten Bildern und $\Delta\alpha$ den Abweichungsabstand der Erkundungskabel bezüglich der Aufnahmelinien Ai bzw. Bj darstellt.

9. Verfahren nach einem der Ansprüche 7 oder 8, dadurch gekennzeichnet, daß es außerdem für wenigstens jeden der räumlichen und/oder zeitlichen Korrelationsabstandswerte $\Delta x_M$ bzw. $\Delta t_M$ bezüglich zweier beliebiger Bilder Ai, Bj darin besteht:
   - die Korrelationskoeffizienten $C\Delta x_{Ai, Bj}$ und $K\Delta x, \Delta t_{Ai, Bj}$ so anzuordnen, daß sie für jeden ein Wertenetz bilden,
   - für jedes Bildpaar Ai, Bj ein repräsentatives Abstandsdiagramm jedes Bildpunktes Ai, Bj in einem Raum $\Delta t_M$, $\Delta t_M$ und mittlere Offsetwerte für jedes Bild zu erzeugen.

**10.** Verfahren nach Anspruch 9, dadurch gekennzeichnet, daß die Bilder, deren mittlere Offsetwerte benachbart sind, durch eine im wesentlichen bezüglich der Dimension $\Delta t_M$ ausgerichteten Position bestimmt werden.

**11.** Verfahren nach einem der Ansprüche 4 bis 10, dadurch gekennzeichnet, daß zum Bestimmen einer Positionsinformation bezüglich der Bilder Ai, Bj entlang der zur Erkundungsrichtung transversalen Richtung y das Verfahren darin besteht, für jedes Bildpaar Ai, Bj
- einen Unähnlichkeitskoeffizienten zu bestimmen, der der Beziehung

$$d_{ij} = \sqrt{(1/\rho^2)-B_0}$$

folgt, in der $\rho$ den Wert des räumlichen Korrelationskoeffizienten $C\Delta x_{Ai,\ Bj}$ und Bo einen beliebigen, konstanten Wert, der das mittlere Rauschniveau der Bildelemente der Bilder Ai, Bj darstellt, darstellen,
- ausgehend von den Werten $d_{ij}$ des Unähnlichkeitskoeffizienten ein zweidimensionales Diagramm zu bilden, wobei das Diagramm darin besteht, jedem Bild Ai, Bj und jedem Bildpaar Ai, Bj die entsprechenden, dem Abstand zwischen den Punkten Ai und Bj angeglichenen Koeffizienten $d_{ij}$ zuzuordnen.

FIG_1

## IMAGES SISMIQUES

FIG_2

FIG_3a

FIG_3b

FIG_3c

FIG_4

$$di_j = \sqrt{\frac{1}{\rho^2} - B_0}$$

| | A1 | B1 | C1 | A2 | B2 | C2 | A3 | B3 | C3 |
|---|---|---|---|---|---|---|---|---|---|
| A1 | | 0,88 | 1,34 | 0,84 | 1,49 | 2,25 | 3,75 | 3,04 | 3,79 |
| B1 | | | 0,69 | 0,86 | 1,09 | 1,70 | 2,51 | 2,60 | 3,32 |
| C1 | | | | 1,19 | 0,72 | 1,20 | 1,34 | 1,97 | 2,80 |
| A2 | | | | | 0,97 | 1,67 | 1,91 | 2,13 | 2,72 |
| B2 | | | | | | 0,78 | 0,98 | 1,31 | 2,05 |
| C2 | | | | | | | 1,39 | 0,86 | 2,43 |
| A3 | | | | | | | | 1,24 | 2,02 |
| B3 | | | | | | | | | 0,93 |
| C3 | | | | | | | | | |

## FIG.5a

## FIG.5b